# EUROPEAN PATENT APPLICATION

(11) **EP 4 618 318 A1**
(43) Date of publication of application: **17.09.2025**
(21) Application number: 24163623.2
(22) Date of filing: 14.03.2024
(51) Int. Cl.: H01R 13/621, H01R 13/717

(54) **VALVE CONNECTOR**

(71) Applicant: ifm electronic gmbh, 45128 Essen (DE)
(72) Inventor: Kowalczyk, Agnieszka, 46-070 Polska Nowa Wies (PL); Konietzko, Marcin, 46-040 Krasiejow (PL); Froese, Bernd, 45468 Mülheim an der Ruhr (DE); Eckwerth, Christiane, 45478 Mülheim (DE); Ryczaj, Wojciech, 45-831 Opole (PL)
(74) Representative: Ifm Patentabteilung

(57) **Abstract**

Valve connector (1), comprising a molded housing (12) in which are arranged successively aLED plate (5), a contact carrier (6), at least one contact pin (13), a sealing system (15), a cable outlet (10) for a connecting cable (11) is offset by 90° to a longitudinal axis (20) of the valve connector (1), and a passageway (16) through the valve connector (1) along to the longitudinal axis (20) for an attachment bolt (4) which has a bolt head (2), characterized in that under the bolt head (2), a molded lighting ring (7) is arranged as a part of the housing (12), and the bolt head (2) and lighting ring (7) combined have dimensions of at least 7 mm in height and at least 8 mm in width, where on an internal cylindrical surface of the lighting ring (7) a sealing ring molding (8) is arranged as an integrated part of the molded lighting ring (7), whereby under the sealing ring molding (8) a wavy contour (9) is arranged as an integrated part of the molded lighting ring (7), and on the attachment bolt (4) under the bolt head (2) at least one boss (3) is formed, in a way that, when the bolt (4) is inserted in the housing (12), the boss (3) lodges in the wavy contour (9) to secure the connection.

## Description

The invention relates to electrical connectors, more particularly to valve connectors with built-in light indicator.

Valve connectors are a special type of connector according to the EN 175301-803 specification used in electronic valve control. They are usually formed of a robust cuboid housing made of thick-walled plastic in which is located a contact carrier with sockets (female). An outlet for a cable connection is offset by 90° to the longitudinal axis of the valve connector. The valve connector is fixed in place by an elongated attachment bolt with an M3 thread inserted in a passageway running through the connector along to the longitudinal axis. The attachment bolt is usually screwed to the counter-connector on the valve by means of a special tool (screwdriver), which makes it impossible to attach without the tool. On the side of the connection between the valve connector and the counter-connector may be placed a seal. Usually this seal has a rectangle shape following the housing form and extends outside the housing. As a matter of fact, it seems from the user experience that the seal usually used on the market is not sealing sufficiently. For example, when connected to counter-connector of a circular shape, this seal may lift off the housing under the compressive force of the counter-connector.

Valve connectors may also have light indicators. It can be a LED inside the housing, then the housing is made from a translucent material, as in US2011300743A1, which is easy for manufacturing but the lighting may not be sufficient: commonly for assuring a sufficient contrast for a light indicator the housing is designed in a black polymeric resin. The light indicator can also be a LED protruding on a side of the housing. That kind of protrusion may hinder the handling, e.g. the screwing of the connector. Some valve connectors use a bolt with a manually screwable head as in DE102022103522A1 or CN203645042U. Although it may help with screwing, the large bolt head, presented in the Chinese utility model, may be easily snapped out, acting as a lever. In the meantime, a bolt head not high enough may lack ergonomics and be hard to handle, which undermines its purpose.

It is also known, that the screwed parts may untighten because of vibrations from the system, and unintentional loosening of the valve connector can cause serious damage to a system. A loosen connection can only be detected during a visual inspection if the attachment bolt untighten far enough from the housing.

The objective of the present invention is to provide a valve connector with a secured and ergonomic attachment bolt screwable by hand, with optimized dimensions, especially secured from loosening due to vibrations and from pull-out, and containing a built-in light indicator.

This objective is achieved by the valve connector according to claim 1.

Advantageous embodiments are specified in the further dependent claims.

According to the present invention, the valve connector comprises a molded lighting ring arranged under the bolt head as a part of the housing. The bolt head and lighting ring combined have dimensions of at least 7 mm in height and at least 8 mm in width, which imparts to the attachment bolt an ergonomic characteristic while in use. The dimensions of the attachment bolt combined with the lighting ring were determined in order to optimize the screwing of the attachment bolt, while fastening the valve connector, for different hand sizes, still keeping in mind to minimize the size of the attachment bolt to avoid leverage pull-out.

On the internal cylindrical surface of the lighting ring, a sealing ring molding is arranged as an integrated part of the molded lighting ring. The purpose of the sealing ring molding is to act as a built-in sealing, which eliminates the need to add a sealing such as an O-ring, which has the disadvantages to be easy to get lost when the connector is not fastened to a counter-connector.

Under the sealing ring molding, a wavy contour is arranged as an integrated part of the molded lighting ring. The wavy contour is a part of the protection against loosening of the connection resulting from vibrations.

On the attachment bolt, at least one boss is formed under the bolt head, in a way that, when the bolt is inserted in the housing through the passageway, the boss lodges in the wavy contour to secure the connection.

In a preferred embodiment, the sealing is a two-shaped sealing with a rectangular shape and an elliptical shape inside.

In another preferred embodiment, the sealing is limited by a limitation in form of a protrusion on the perimeter of the housing.

The LED plate contains preferably SMD LED.

It is preferable that the wavy contour is made of PU and the bosses on the attachment bolt are made of PA. PU having a lower hardness than PA, it allows the wavy contour to be sufficiently deformed under the pressure applied by the bosses of the attachment bolt to let them lodge in the troughs of the wavy contour, without abrading it, then when lodged, the bosses are maintained inside the troughs of the wavy ring strengthening the connection by acting like a limiter.

The invention is explained in more detail below with reference to the drawings.

It shows schematically:
Figure 1 is a sectional view of the valve connector
Figure 2 is a 3D cutaway view of the valve connector with separated attachment bolt
Figure 3 is a sectional view of separated components of the valve connector
Figure 4 is a 3D view of the bottom side of the valve connector with the sealing element
Figure 5 is a close sectional view of the passageway in the valve connector
Figure 6 is a sectional view of the attachment bolt

In the following description of the preferred embodiments, identical reference signs denote identical or comparable components.

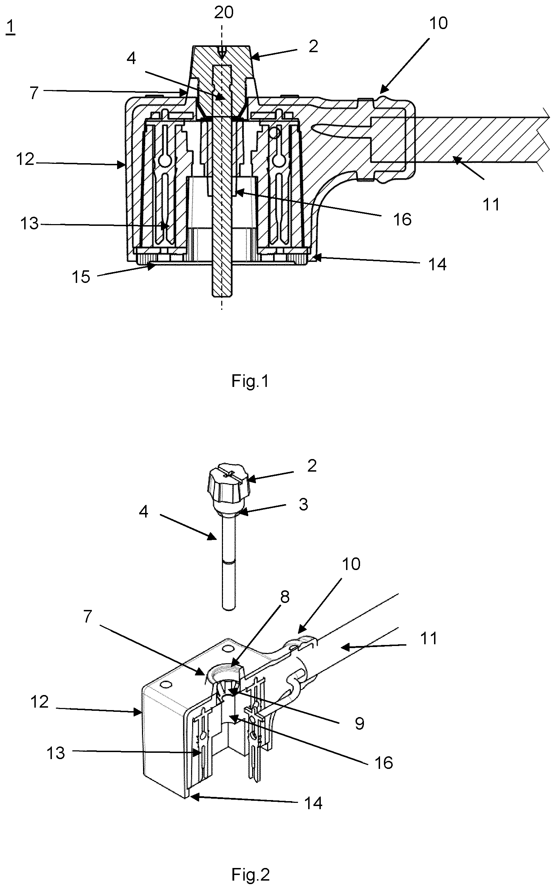

Figure 1 describes the valve connector 1, as a cuboid connector comprising a housing 12 molded in two steps: at first is molded the layer of translucent polymer and in a second step the layer of black polymer is molded, and the polymer is the same for both layers, preferably polyurethane. Inside of the housing 12 are represented one or more contact pins 13 and a passageway 16 going through the valve connector along a longitudinal axe 20. The attachment bolt 4 is placed inside the valve connector, going through the passageway 16. The bolt head 2 is fitting into the valve connector against the lighting ring 7, forming an ergonomic, screwable by hand, fastening system for the valve connector 1, in order to be fastened to a counter-connector (not represented). A sealing system 15 is placed on the bottom side of the valve connector, where the connection with the counter-connector is made. The sealing system 15 is surrounded by a limitation 14 which is part of the housing 12, limitation which keeps the sealing from being pushed outside of the valve connector. The valve connector possesses a cable outlet 10, through which a connecting cable 11 can pass.

Figure 2 presents the valve connector with the attachment bolt 4 in separated state. The zone of contact between the attachment bolt 4 and the valve connector is clearly visible. In the lighting ring 7 are present sealing ring moldings 8 which acts as a sealing and does not require an extra O-ring which could get lost or squashed between the valve connector and the attachment bolt 4. Under the lighting ring 7 is situated the wavy contour 9, which combined to the bosses 3 on the attachment bolt 4, forms a protection against vibration by strengthening the connection and preventing the attachment bolt 4 from unscrewing, which would lead to a loss of connection and loss of sealing between the valve connector and counter-connector.

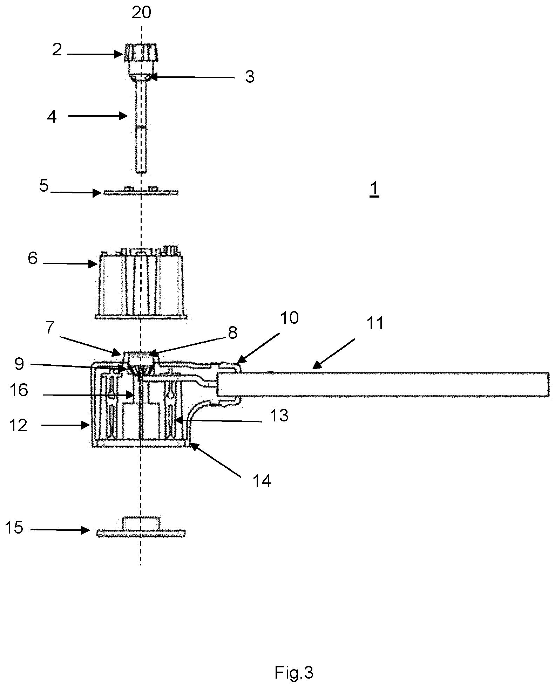

Figure 3 shows the parts forming the valve connector 1 in separated pieces. In comparison to figure 1, there are additionally represented the LED plate 5 placed on the contact carrier 6. The contact carrier 6 carries the contact pins 13 which connect with the counter-connector.

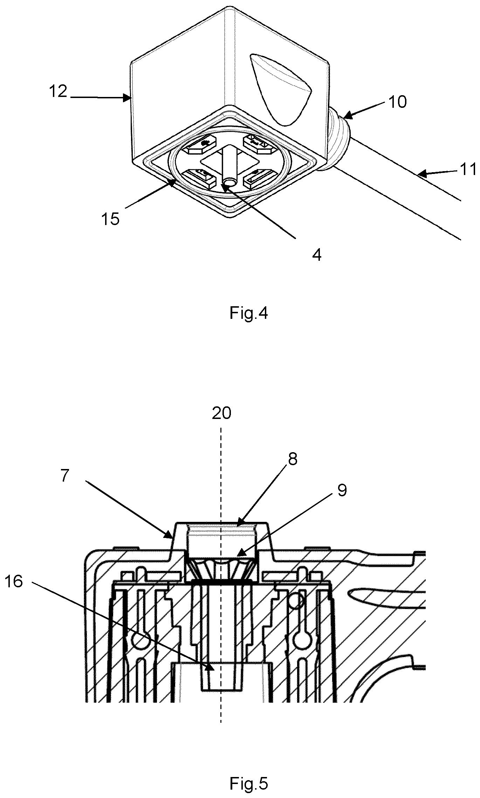

Figure 4 depicts an external view of the valve connector 1 from the lower perspective, focusing on the connective side of the valve connector. The sealing system 15 is represented in the two-shaped configuration, with an elliptically shaped seal inside of a rectangularly shaped seal, and the attachment bolt 4 which fasten the valve connector to the counter-connector (not represented).

Figure 5 is a close view of the passageway 16 in the valve connector 1 with the lighting ring 7, the sealing ring molding 8 and the wavy contour 9, without the attachment bolt 4. The passageway 19, the lighting ring 7, the sealing ring molding 8 and the wavy contour 9 are formed during the first phase of molding of the translucent polymer.

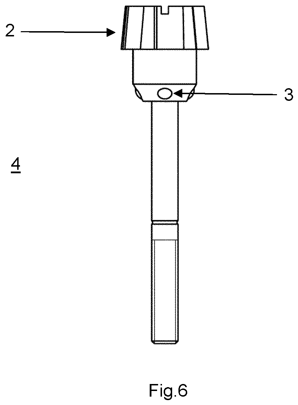

Figure 6 is a close view of the attachment bolt 4 with the bosses 3 clearly represented, and the bolt head 2. One of the aspects which also plays a role in the ergonomic in handling the bolt head is the irregular contour of the bolt head 2.

### References:

- 1: Valve connector
- 2: Bolt head
- 3: Boss
- 4: Attachment bolt
- 5: LED plate
- 6: Contact carrier
- 7: Lighting ring
- 8: Sealing ring molding
- 9: Wavy contour
- 10: Cable outlet
- 11: Connecting cable
- 12: Housing
- 13: Contact pin
- 14: Limitation
- 15: Sealing system
- 16: Passageway
- 20: Longitudinal axis

## Claims

1. Valve connector, comprising
A molded housing (12) in which are arranged
A LED plate (5),
A contact carrier (6),
At least one contact pin (13),
A sealing system (15),
A cable outlet (10) for a connecting cable (11) is offset by 90° to a longitudinal axis (20) of the valve connector (1),
And a passageway (16) through the valve connector (1) along to the longitudinal axis (20) for an attachment bolt (4) which has a bolt head (2),
**characterized in**
**that** under the bolt head (2), a molded lighting ring (7) is arranged as a part of the housing (12), and the bolt head (2) and lighting ring (7) combined have dimensions of at least 7 mm in height and at least 8 mm in width, where on an internal cylindrical surface of the lighting ring (7) a sealing ring molding (8) is arranged as an integrated part of the molded lighting ring (7), whereby under the sealing ring molding (8) a wavy contour (9) is arranged as an integrated part of the molded lighting ring (7),
and on the attachment bolt (4) under the bolt head (2) at least one boss (3) is formed, in a way that, when the bolt (4) is inserted in the housing (12), the boss (3) lodges in the wavy contour (9) to secure the connection.

2. Valve connector according to claim 1, where the sealing (15) is a two-shaped sealing with a rectangular shape and an elliptical shape inside,

3. Valve connector according to claim 1 and 2, where the sealing is limited by a limitation (14) in form of a protrusion on the perimeter of the housing,

4. Valve connector according to claim 1, where the LED plate (5) contains at least one lightning element LED as a surface mounted device,

5. Valve connector according to claim 1, where the wavy contour (9) is made of PU,

6. Valve connector according to claim 1, where the boss (3) is made of PA.
